# EUROPÄISCHE PATENTSCHRIFT

(11) **EP 1 859 883 B1**
(45) Veröffentlichungstag und Bekanntmachung des Hinweises auf die Patenterteilung: **29.12.2010**
(21) Anmeldenummer: 07108352.1
(22) Anmeldetag: 16.05.2007
(51) Int. Cl.: B23C 5/20

(54) **Schneideinsatz mit Planschneide, insbesondere für Planfräser**
Cutting insert with wiper, in particular for face milling
Plaquette de coupe doté d'unsegment racleur, en particulier pour fraise à surfacer

(30) Priorität: 22.05.2006 DE 102006024131
(43) Veröffentlichungstag der Anmeldung: 28.11.2007
(73) Patentinhaber: Sandvik Intellectual Property AB, 811 81 Sandviken (SE)
(72) Erfinder: SCHERBARTH, Stefan, 41464, Neuss (DE)
(74) Vertreter: WSL Patentanwälte

(56) Entgegenhaltungen:
- EP-A- 0 088 505
- EP-A- 0 112 136
- US-B1- 6 543 970

## Beschreibung

Die vorliegende Erfindung betrifft einen Schneideinsatz, insbesondere für Planfräser, mit einer oberen und einer unteren Fläche, welche durch umlaufende Randflächen miteinander verbunden sind, wobei der Schneideinsatz in der Draufsicht auf die obere Fläche eine in etwa achtekkige Grundform mit abwechselnd kleinen und großen Eckenwinkeln hat, wobei zwischen den Ecken jeweils am Übergang der Umfangsflächen zu der oberen und/oder unteren Fläche jeweils Schneidkanten gebildet werden, von denen ein Teil für die Verwendung als Schruppschneiden in der Draufsicht leicht gebrochen oder über einen teilweise relativ kleineren Radius gekrümmt verlaufen und ein anderer Teil als Schlichtschneiden zwischen benachbarten Ecken gerade oder mit einem relativ größeren Radius gekrümmt verläuft.

Weiterhin betrifft die vorliegende Erfindung einen Planfräser mit stirnseitig am Umfang angeordneten Sitzen für mehrere in der Grundform achteckige Schruppschneideinsätze, wobei in mindestens einem Plattensitz ein Schneideinsatz angeordnet ist, der eine obere und eine untere Fläche aufweist, welche durch umlaufende Randflächen miteinander verbunden sind, wobei der Schneideinsatz in der Draufsicht auf die obere Fläche eine in etwa achteckige Grundform mit abwechselnd kleinen und großen Eckenwinkeln hat, wobei zwischen den Ecken jeweils am Übergang der Umfangsflächen zu der oberen und/oder unteren Fläche jeweils Schneidkanten gebildet werden, wobei ein Teil der Schneidkanten für die Verwendung als Schruppschneiden in der Draufsicht leicht gebrochen oder über einen relativ kleineren Radius gekrümmt verläuft.

Unter einem "relativ kleineren" Radius ist in diesem Zusammenhang ein Radius zu verstehen, der kleiner und vorzugsweise deutlich kleiner als der maximale Durchmesser des Schneideinsatzes ist, während eine "relativ größerer" Radius größer und vorzugsweise deutlich größer als der maximale Durchmesser des Schneideinsatzes ist. "leicht gebrochen" bezeichnet einen Knick um einen kleinen Winkel von weniger als 30° vorzugsweise weniger als 20° (gegebenenfalls abgerundet mit einem relativ kleineren Radius) in einem ansonsten (nahezu) geradlinigen Abschnitt des Umrisses bzw. der Umfangsflächen und der Schneidkanten.

Ein entsprechender Schneideinsatz ist beispielsweise aus dem US-Patent Nr. 6,543,970 bekannt. Dieser bekannte Schneideinsatz hat im wesentlichen eine sehr ähnliche Grundform wie der Schneideinsatz der vorliegenden Erfindung, wobei jedoch alle Varianten dieses bekannten Schneideinsatzes eine vierzählige Symmetrieachse haben, d.h. es sind alle Seitenflächen, die sich jeweils zwischen zwei Ecken mit kleinerem Eckenwinkel erstrecken, identisch und die kleinen und großen Eckenwinkel sind untereinander jeweils gleich. (Zur Vereinfachung der Beschreibung werden im folgenden die Ecken mit kleinerem Eckenwinkel als "spitze Ecken" und die Ecken mit größerem Eckenwinkel als "stumpfe Ecken" bezeichnet, auch wenn selbst der kleinere Eckenwinkel ein stumpfer Winkel (> 90°) ist.)

Anders ausgedrückt, sind diese bekannten Schneideinsätze nicht nur spiegelsymmetrisch bezüglich zweier Ebenen, die durch die gegenüberliegenden stumpfen Ecken verlaufen(und die zentrale Achse senkrecht zur oberen Fläche enthalten), sondern auch symmetrisch bezüglich einer Drehung um die zentrale Achse des Schneideinsatzes um jeweils 90° und teilweise auch bezüglich Spiegelung an Ebenen, welche durch die diagonal gegenüberliegenden spitzen Ekken verlaufen.

Außerdem haben diese bekannten Schneideinsätze nur relativ kurze Planfasen in Form kurzer, abgewinkelter Nebenschneidkanten.

Darüber hinaus ist es bekannt, an Planfräsern, die mit mehreren Schrupp-Schneideinsätzen ausgestattet sind (wie die oder ähnlich den aus der US 6,543,970 bekannten), eine dieser Schneidplatten zu ersetzen durch eine sogenannte Breitschlichtplatte. Eine Breitschlichtplatte ist gekennzeichnet durch eine sehr lange gerade oder unter einem sehr großen Radius gekrümmte Schneidkante, wobei die Breitschlichtplatte derart am axial vorderen Ende eines Planfräsers angeordnet ist, daß die Schlichtschneide im wesentlichen radial und senkrecht zur Achse des Fräswerkzeugs verläuft. Dabei ist darauf zu achten, daß die relativ lange Schlichtschneide dieser Breitschlichtplatte in axialer Richtung geringfügig über die Nebenschneidkanten der anderen Schneideinsätze hervorsteht oder jedenfalls durch keine andere Schneidkante in axialer Richtung überragt wird, während die am Umfang angeordnete Schruppschneide der Breitschlichtplatte gegebenenfalls gegenüber den Hauptschneiden (= Schruppschneiden) der übrigen Schneideinsätze radial etwas nach innen zurückversetzt sein kann. Im Betrieb eines solchen Planfräsers wird darauf geachtet, daß der radiale Vorschub des Fräsers die Länge der Schlichtschneide der Breitschlichtplatte nicht übersteigt damit die bei aufeinander folgenden Umdrehungen des Fräsers von der Schlichtschneide überstrichenen bzw. bearbeiteten Bereiche einander überlappen, so daß am Werkstück auf der Stirnseite des Planfräsers eine glatte, ebene Fläche ("Planfläche") erzeugt wird.

Nachteilig bei der Verwendung derartiger Breitschlichtplatten ist jedoch, daß, falls sie in den selben, unveränderten Plattensitz wie auch die übrigen Schneideinsätze eingesetzt werden sollen, für eine vorgegebene Drehrichtung des Fräsers nur eine einzige effektive Schlichtschneide aufweisen können, so daß sie nach dem Verschleiß dieser einen Schneide weggeworfen werden müssen.

Gegenüber diesem Stand der Technik liegt der vorliegenden Erfindung die Aufgabe zugrunde, einen Schneideinsatz und einen Planfräser mit den eingangs genannten Merkmalen zu schaffen, wobei der Schneideinsatz ebenso zu verwenden ist wie eine Breitschlichtplatte, dennoch aber mindestens zwei und vorzugsweise mindestens vier für eine Drehrichtung nutzbare Schlichtschneiden aufweist.

Diese Aufgabe ist durch die Merkmale des Anspruchs 1 gelöst.

Anders ausgedrückt könnte man den erfindungsgemäßen Schneideinsatz auch dadurch definieren, daß er eine obere und eine untere Fläche mit einer diese verbindenden umlaufenden Randfläche hat und in der Draufsicht auf die obere Fläche im wesentlichen achteckig erscheint, wobei der Schneideinsatz dadurch gekennzeichnet ist, daß er mindestens zwei diagonal gegenüber angeordnete Schlichtschneiden und im übrigen mindestens sechs Anlageflächen aufweist, von denen jeweils mindestens drei unter relativen Winkeln und Positionen so angeordnet sind, daß sie mit den Anlageflächen eines Plattensitzes passend in Eingriff treten können, der für entsprechende, aus der US 6,543,970 bekannte Schruppschneideinsätze bekannt ist, wenn je eine der Schlichtschneiden an der Stirnseite eines Planfräsers in einer Radialebene angeordnet ist. Dabei sollten die Schlichtschneiden eine Länge haben, die wenigstens 30% und vorzugsweise wenigstens einem Drittel des maximalen Durchmessers des Schneideinsatzes entspricht. Diese Definition wird auch dann erfüllt, wenn der Schneideinsatz hinsichtlich irgendwelcher irrelevanter Flächenabschnitte, die weder für den Eingriff mit Anlageflächen vorgesehen sind, noch Einfluß auf die Spanbildung, die Spanformung oder den Spantransport haben, die Symmetriebedingungen der zuvor definierten Ausgestaltungen nicht erfüllt. Es versteht sich, daß die obigen Symmetriemerkmale sich nur auf relevante Schneidkanten und Flächenabschnitte beziehen.

Hinsichtlich des Planfräsers wird die obige Aufgabe durch einen Planfräser mit den Merkmalen des Anspruchs 10 gelöst.

Zur Erleichterung der Darstellung kann man den erfindungsgemäßen Schneideinsatz näherungsweise auch als in der Grundform viereckig betrachten, wobei die Ecken dieser viereckigen Grundform durch die spitzen Ecken definiert werden und die Seiten zwischen zwei spitzen Ekken die stumpfen Ecken mit umfassen. Die stumpfen Ecken werden dabei als "Ecken" ignoriert und als Modifikation des Kantenverlaufs zwischen zwei spitzen Ecken betrachtet.

Konkret bedeutet die obige Definition der bevorzugten Variante dann, daß zwar jeweils die zwischen zwei spitzen Ecken verlaufenden Umfangsflächen auf gegenüberliegenden Seiten des Schneideinsatzes identisch bzw. spiegelbildlich zueinander ausgebildet sind, nicht jedoch identisch oder spiegelbildlich mit den demgegenüber jeweils um 90° versetzten Flächen zwischen einem anderen Paar spitzer Ecken. Zwei benachbarte Abschnitte der Umfangsflächen (und damit auch benachbarte Schneidkanten) zwischen aufeinander folgenden spitzen Ecken sind also voneinander verschieden, während diametral gegenüberliegende Abschnitte zwischen spitzen Ecken jeweils gleich bzw. spiegelbildlich zueinander ausgebildet sind.

Dabei ist es möglich, die Schneiden oder Abschnitte der Schneiden (die sich jeweils von einer spitzen zu der nächsten stumpfen Ecke erstrecken oder umgekehrt) auf zwei gegenüberliegenden Seiten des gedachten Vierecks jeweils als Schlichtschneiden auszubilden, die bei einem Planfräser auf der Stirnseite und im wesentlichen senkrecht zur Fräserachse verlaufen, und die Schneiden auf den beiden verbleibenden gegenüberliegenden Seiten des Vierecks als am Umfang des Fräsers anzuordnende Schruppschneiden auszubilden. Die Schruppschneiden haben dabei vorzugsweise einen leicht abgewinkelten oder teilweise gekrümmten Verlauf mit einem relativ kleineren Krümmungsradius, wohingegen die Schlichtschneiden im Wesentlichen gerade oder unter einem sehr großen Krümmungsradius gekrümmt verlaufen. Das heißt, die jeweils um 90° gegeneinander versetzten Seiten des Schneideinsatzes sind aufgrund dieser unterschiedlichen Schneidkantenverläufe notwendigerweise voneinander verschieden, und entsprechend unterscheiden sich auch die jeweils um 90° gegeneinander versetzten Umfangsflächen, die an die Schneidkanten angrenzen.

Im übrigen hat der Schneideinsatz jedoch seine im wesentlichen wie oben definierte achteckige Grundform und paßt in denselben Plattensitz wie ein Schneideinsatz, bei welchem die Breitschlichtschneiden durch Schneiden ersetzt sind, die im wesentlichen der Form der Schruppschneiden entsprechen, wobei sich auch die Winkel der spitzen und stumpfen Ecken zwischen dem Schneideinsatz mit Schlichtschneiden und dem Schruppschneideinsatz unterscheiden können.

Auf einer Seite weist ein solcher Schneideinsatz auf jeden Fall zwei in einer Drehrichtung verwendbare Schlichtschneiden auf, wobei die verbleibenden beiden Schlichtschneiden für einen Fräser verwendet werden könnten, der in entgegengesetzter Richtung rotiert. Wenn der Schneideinsatz darüber hinaus als doppelseitiger Wendeschneideinsatz ausgebildet wird, d.h. wenn die obere Fläche und die untere Fläche identisch sind und die Umfangsflächen sich im wesentlichen senkrecht zu den durch die obere und untere Fläche definierten Ebenen erstrecken oder auch konkav ausgebildet sind, stehen durch Wenden des Schneideinsatzes für eine Drehrichtung insgesamt vier Schlichtschneiden zur Verfügung anstelle der einen Breitschlichtschneide, die man nach dem Stand der Technik zur Verfügung hat. Dadurch wird der Einsatz derartiger Schlichtschneidplatten wesentlich ökonomischer, und darüber hinaus ist es nicht notwendig, die Plattensitze in einem Fräser in irgendeiner Weise zu verändern oder anzupassen.

Bevorzugt ist dabei eine Variante der erfindungsgemäßen Wendeschneidplatte, bei welcher die spitzen Ecken gebrochen bzw. angefast oder abgerundet sind. Dies macht die Ecken weniger empfindlich gegenüber den beim Fräsen auftretenden Stoßbelastungen.

Weiterhin haben in der bevorzugten Ausführungsform die spitzen Ecken einen um mindestens 30° kleineren Winkel als die stumpfen Ecken. Insbesondere beträgt in einer besonders bevorzugten Ausführungsform diese Differenz etwa 40°, d.h. die spitzen Ecken weisen einen Eckenwinkel von etwa 115° auf, und die stumpfen Ecken haben einen Eckenwinkel von ungefähr 155°, wobei sich dies Angabe auf die unmittelbar an die jeweiligen Ecken angrenzenden Flächen- bzw. Schneidkantenabschnitte bezieht, ungeachtet eines ansonsten gekrümmten oder leicht abgewinkelten Verlaufs der Schruppschneiden.

Die gegenüber den Seiten mit den Schlichtschneiden um etwa 90° versetzten Seiten mit den Schruppschneiden bestehen in der bevorzugten Ausführungsform aus einem sich von der Ecke mit kleinerem Winkel aus erstreckenden ersten geraden Abschnitt und einem dem gegenüber leicht abgewinkelten zweiten kurzen Abschnitt, der sich bis zu der stumpfen Ecke erstreckt. Die Abwinklung zwischen dem längeren und dem kurzen Abschnitt einer solchen Schruppschneide liegt dabei in der Größenordnung von 2 bis maximal 10°, und insbesondere bei 5°, und der Übergang zwischen diesen beiden Abschnitten kann, ebenso wie die Ecke selbst, mit einem kleineren Radius gerundet sein. Alternativ kann ein Teil der Schruppschneide mit konstantem oder variierendem Radius gekrümmt sein.

Weiterhin weist der erfindungsgemäße Schneideinsatz in der bevorzugten Ausführungsform eine zentrale Befestigungsbohrung auf. Dies ermöglicht eine einfache und platzsparende Befestigung ohne Klemmpratzen.

Wie bereits erwähnt, sollte außerdem der Schneideinsatz in der bevorzugten Ausführungsform als doppelseitiger Wendeschneideinsatz ausgebildet sein, um auf diese Weise die Zahl der verwendbaren Schneiden zu verdoppeln. Die obere und die untere Fläche sind dementsprechend identisch ausgebildet und die Umfangsflächen verlaufen im Wesentlichen senkrecht zu den durch die obere bzw. untere Fläche definierten Ebenen

Die obere und im Falle eines doppelseitigen Schneideinsatzes auch die untere Fläche des Schneideinsatzes sollten vorzugsweise Spanformungsstrukturen aufweisen, die sich an die jeweiligen Schneidkanten anschließen und zweckmäßigerweise in Form einer Spanmulde ausgebildet sind, wobei die Schneidkanten selbst eine sehr schmale, ebene Verstärkungsfläche aufweisen können, an welcher die Spanmulde anschließt.

Weiterhin ist eine Ausführungsform des erfindungsgemäßen Schneideinsatzes bevorzugt, bei welcher der kürzeste Abstand einer Schlichtschneide zu der gegenüberliegenden stumpfwinkligen Ecke geringfügig größer ist als der kürzeste Abstand einer Schruppschneide zu der der Schruppschneide gegenüberliegenden stumpfwinkligen Ecke. Diese Differenz braucht nur wenige Zehntel Millimeter, z.B. zwischen 0,1 und maximal 2 mm, zu betragen und sorgt dafür, daß beim Einbau einer derartigen Wendeschneidplatte in den Plattensitz, der ansonsten für Wendeschneidplatten vorgesehen ist, die ausschließlich mit Schruppschneiden bestückt sind und die z. B. eine vierzählige Symmetrieachse aufweisen können, die Schlichtschneide des erfindungsgemäßen Schneideinsatzes in axialer Richtung um ein entsprechendes Maß gegenüber den axial verlaufenden Schneiden der anderen Schneideinsätze hervorragt, während die entsprechende Schruppschneide des erfindungsgemäßen Schneideinsatzes, die am Umfang des Fräsers angeordnet ist, gegenüber den anderen Schruppschneiden radial etwas zurückversetzt ist. Mit anderen Worten: Der erfindungsgemäße Schneideinsatz, der in erster Linie mit der Schlichtschneide eine ebene Fläche erzeugen soll, leistet weniger Schneidarbeit mit seiner Schruppschneide und dafür etwas mehr Schneidarbeit mit der Schlichtschneide, wobei das erwähnte Differenzmaß auch im Verhältnis zu den übrigen Schneideinsätzen so eingestellt werden kann, daß die Gesamtbelastung dieses Schneideinsatzes in etwa die gleiche oder etwas geringer ist wie die Belastung der übrigen Schneideinsätze.

Die Erfindung ist außerdem auf einen Planfräser gerichtet, der mit mehreren Schneideinsätzen bestückt ist, von denen mindestens einer, jedoch weniger als die Hälfte der Schneideinsätze, ein Schneideinsatz gemäß der vorliegenden Erfindung ist. Typischerweise weist ein Planfräser mindestens sechs bis acht Schneideinsätze auf, und bei einer solchen Anzahl ist es zweckmäßig, wenn einer der Schneideinsätze ein erfindungsgemäßer Schneideinsatz mit einer relativ langen Schlichtschneide ist, wobei der radiale Vorschub des Fräsers pro Umdrehung kleiner eingestellt wird als die Länge der Schlichtschneide. Bei einem größeren Planfräser mit einer höheren Anzahl von Schneideinsätzen könnten auch zwei oder drei der Schneideinsätze die erfindungsgemäße Ausgestaltung mit einer relativ langen Schlichtschneide haben. In diesem Fall könnte der radiale Vorschub des Fräsers pro Umdrehung entsprechend verdoppelt oder verdreifacht werden, d.h. bei Verwendung von zwei (diagonal gegenüberliegend eingebauten) Schneideinsätzen mit Schlichtschneiden müßte der radiale Vorschub kleiner gehalten werden als das Doppelte der Länge der Schlichtschneide, und im Falle von drei symmetrisch um den Umfang des Fräsers verteilten Schneideinsätzen mit Schlichtschneide könnte der radiale Vorschub bis zum Dreifachen der Länge einer der Schlichtschneiden oder etwas weniger betragen, ohne daß die durch die Schlichtschneiden erzeugte Fläche uneben wird. Allerdings müssen bei Verwendung mehrerer derartiger Schneideinsätze mit Schlichtschneiden diese Schneideinsätze in axialer Richtung sehr exakt eingestellt und aufeinander abgestimmt werden, was bei Verwendung nur einer Schlichtschneide nicht erforderlich ist, so daß auch bei größeren Planfräsern die Verwendung nur eines Schneideinsatzes mit Breitschlichtschneide bevorzugt ist.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine perspektivische Ansicht eines erfindungsgemäßen Schneideinsatzes,
- Figur 2: eine Draufsicht auf die Oberseite einer im Plattensitz eines Planfräsers montierten Wendeschneidplatte,
- Figur 3: eine Wendeschneidplatte mit Spanformungsstrukturen in der Oberfläche und eine Schnittansicht entlang der Linie A-B in Figur 4,
- Figur 4: eine herkömmliche Wendeschneidplatte mit Schruppschneiden,
- Figur 5: eine herkömmliche Wendeschneidplatte mit einer Breitschlichtschneide, und
- Figur 6: die Wendeschneidplatte nach Figur 2 mit einer zusätzlich gestrichelt dargestellten Schruppschneidplatte nach Figur 4 in demselben Plattensitz.

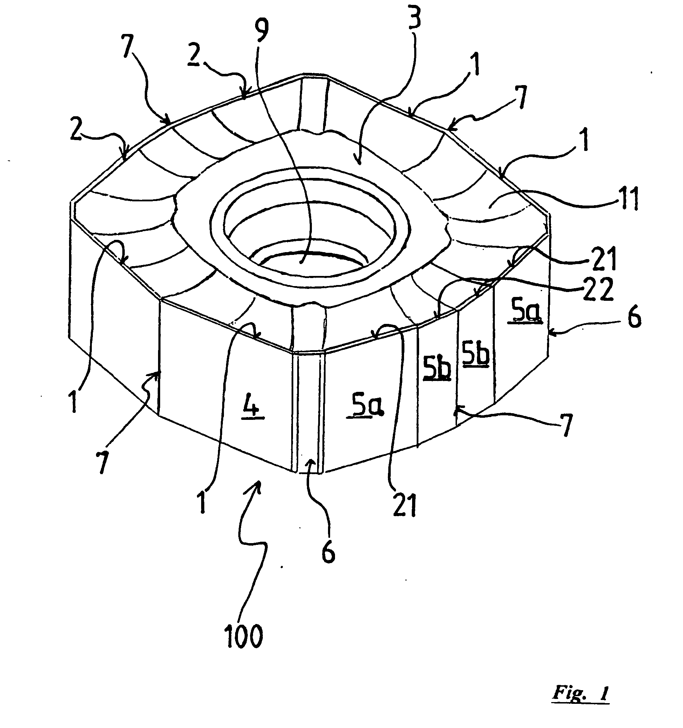

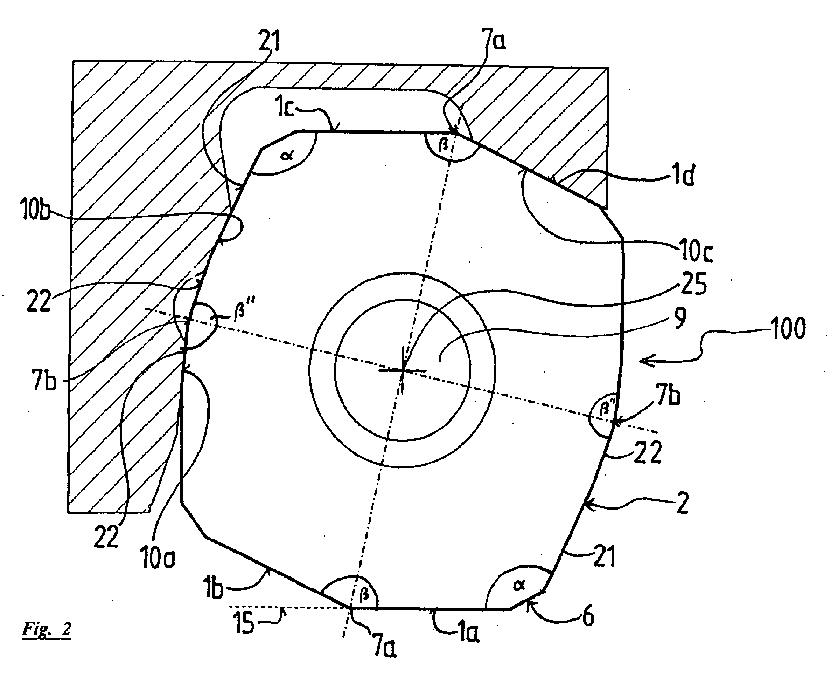

In Figur 1 erkennt man eine perspektivische Ansicht eines insgesamt mit 100 bezeichneten, erfindungsgemäßen Schneideinsatzes und in Figur 2 eine Umrißansicht bzw. Draufsicht von oben auf denselben Schneideinsatz 100, der die Grundform eines Achtecks hat, mit abwechselnd etwas spitzeren Ecken 6 und stumpferen Ecken 7a, 7b, wobei der Schneideinsatz aber zur Vereinfachung der Beschreibung auch als in der Grundform viereckig angesehen werden könnte, indem man die Ecken 6 mit dem kleineren Eckenwinkel als Ecken eines Vierecks betrachtet, während die dazwischen verlaufenden Seiten als durchgehende Seiten eines Vierecks angesehen werden, die lediglich etwas gekrümmt oder gebrochen und stumpfwinklig aneinandergesetzt sind.

Jeweils gegenüberliegende Seiten dieses Viereckes sind identisch, d.h. spiegelbildlich zueinander ausgebildet, jedoch sind benachbarte Seiten eines solchen Viereckes, d.h. jeweils zwischen zwei Ecken 6 verlaufende Umfangsflächen 4 und 5, nicht miteinander identisch ausgebildet. Dies erkennt man in Figur 1 deutlich anhand der ebenen Umfangsflächenabschnitte 4, die an die Schlichtschneiden 1 anschließen, während die entsprechenden Flächen 5a, 5b, die an die Schneidkanten 2 anschließen, offensichtlich gebrochen sind bzw. stumpfwinklig aneinanderstoßen. Dies führt dazu, daß der Schneideinsatz bezüglich einer Drehung um eine durch die zentrale Befestigungsbohrung 9 verlaufende Achse nur bezüglich Drehungen um 180° symmetrisch ist, nicht aber bezüglich einer Drehung um 90°.

Außerdem ist der Schneideinsatz hier spiegelbildlich bezüglich einer Ebene, die durch gegenüberliegende stumpfe Ecken 7 verläuft und die zentrale Achse (nicht dargestellt) des Schneideinsatzes enthält. Dies sorgt dafür, daß der Schneideinsatz auch nach dem Wenden um 180° um eine Achse parallel zur oberen oder unteren Fläche 3 dieselbe Konfiguration hat wie in Figur 1 und den übrigen Figuren dargestellt. Der Schneideinsatz ist allerdings nicht spiegelsymmetrisch bezüglich der diagonal durch die spitzen Ecken 6 und die zentrale Achse verlaufenden Ebenen.

Die obere Fläche 3 ist wiederum identisch und spiegelbildlich zu der unteren, hier nicht dargestellten Fläche ausgebildet.

Während in Figur 1 alle spitzen Ecken pauschal mit 6 und die stumpfen Ecken pauschal mit 7, die Schlichtschneiden mit 1 und die Schruppschneiden mit 2 bezeichnet werden, werden die stumpfen Ecken 7 und Schneidkanten in Figur 2 noch individuell unterschieden durch Hinzufügung der Kleinbuchstaben a und b bzw. a, b, c und d. Weiterhin wird bei den Schneidkanten 2 noch unterschieden zwischen Schneidkantenabschnitten 21 und 22,

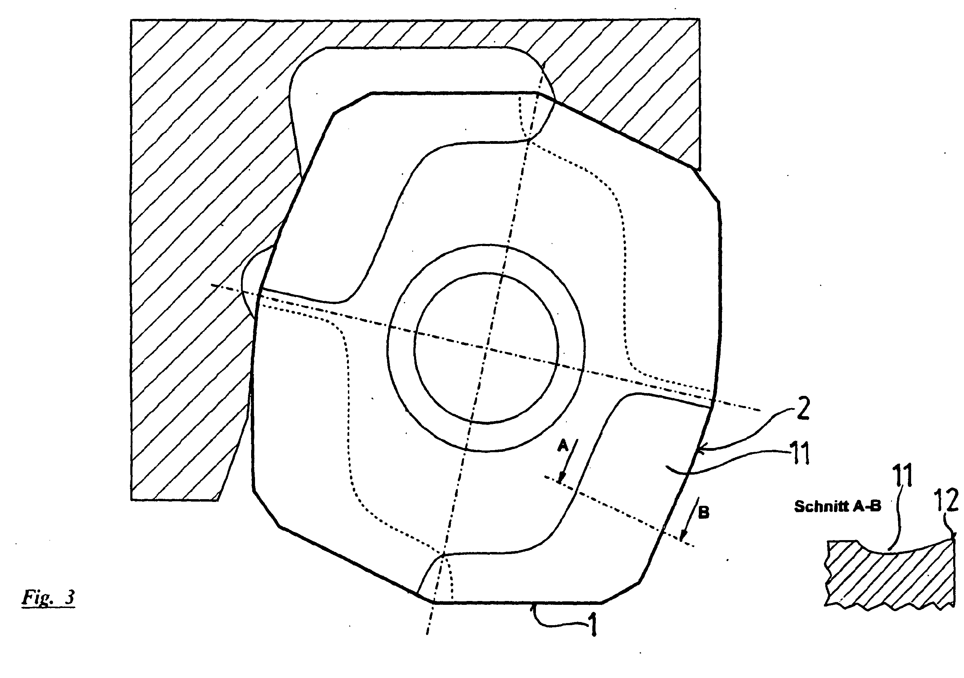

Man erkennt außerdem in Figur 1, daß die Schneidkanten durch eine schmale ebene Fasenfläche 12 (siehe auch Figur 3) verstärkt and damit weniger ausbruchgefährdet sind, wobei an die Fase 12 eine Spanmulde 11 anschließt.

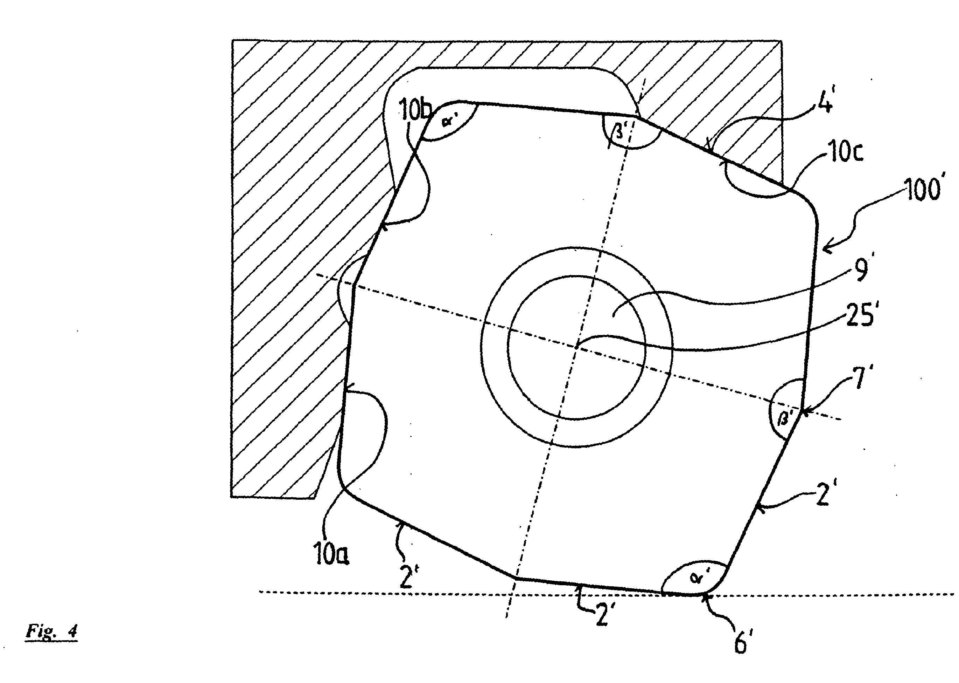

Figur 4 zeigt einen Schneideinsatz nach dem bereits diskutierten Stand der Technik, der für einen erfindungsgemäßen Fräser als Schruppschneideinsatz verwendet werden könnte, wobei die Haupt- und Nebenschneidkanten 2' hier einfache Geraden sind und die Übergänge von den sich im wesentlichen entlang des Umfanges erstreckenden Hauptschneidkanten 2' zu den sich am axial vorderen Ende des Fräsers erstreckenden Nebenschneidkanten 2' an den Ecken 6' mehr oder weniger stark gerundet sind.

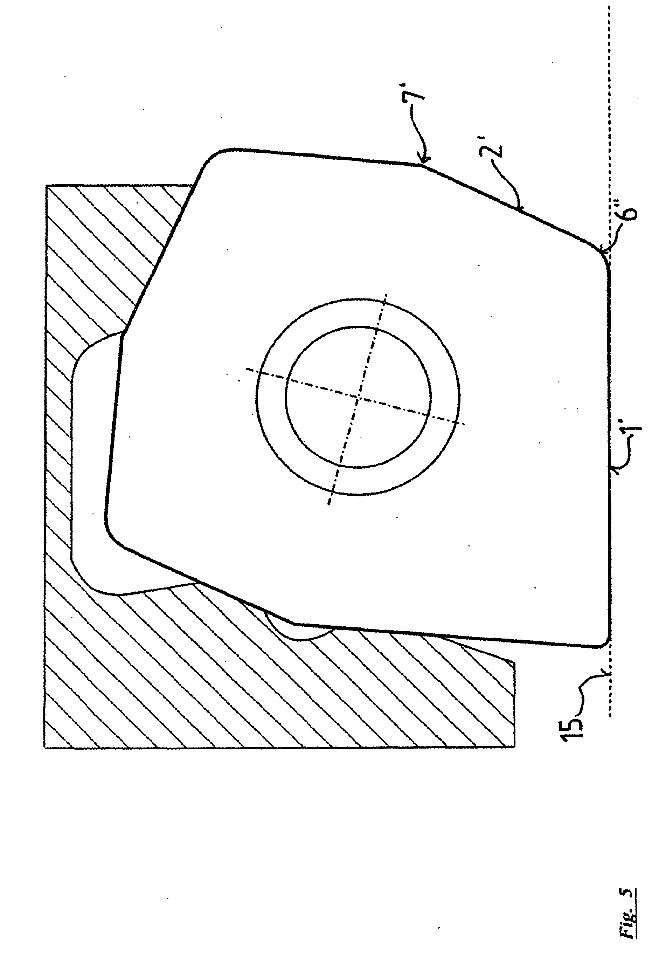

Ausschließlich mit derartigen herkömmlichen Wendeschneidplatten in der dargestellten Anordnung ausgestattete Planfräser erzeugen relativ rauhe Stirnflächen, da der axial am weitesten vorstehende Teil jeder Wendeschneidplatte der abgerundete Übergang einer spitzen Schneidecke 6' zu der Nebenschneide 2' ist, so daß, wenn der radiale Vorschub pro Schneidplatte ein Maß erreicht, innerhalb dessen die Krümmung dieses Überganges bzw. der Ecke 6' sichtbar ist (also z. B. Vorschub pro Platte in etwa gleich dem Radius der Ecke 6'), entsprechende flache, nutartige Vertiefungen entstehen. Dies ergibt sich notwendigerweise aufgrund der konkreten Eckenwinkel dieser Schneideinsätze und der konkreten Winkel der Anlageflächen 10a, 10b und 10c des Plattensitzes relativ zueinander und relativ zu der Fräserachse, die hier parallel entlang der linken Blattkante verläuft. Will man jedoch eine sehr ebene Fläche auf der Stirnseite des Fräsers erzeugen, so wird üblicherweise eine sogenannte Breitschlichtplatte gemäß Figur 5 eingesetzt, d.h. eine der in Figur 4 dargestellten Wendeschneidplatten, von denen mehrere über den Umfang eines Planfräsers verteilt sind, wird durch die in Figur 5 dargestellte Breitschlichtplatte ersetzt, deren Schlichtschneide in axialer Richtung soweit vorsteht, daß sie die durch die abgerundeten Übergänge der Schneidecke 6' zur Nebenschneide 2 der übrigen Wendeschneidplatten 100' erzeugten Strukturen einebnet und beseitigt. Wie bereits erwähnt, erfordert dies eine speziell an den Plattensitz eines entsprechenden Planfräsers angepaßte Breitschlichtplatte, die nur eine einzige nutzbare Schneide aufweist.

Bei Verwendung an Fräsern mit entgegengesetzter Rotationsrichtung könnte eine solche Breitschlichtplatte auch als doppelseitige Platte ausgebildet werden, aber auch dann wäre die Anzahl der Schneiden auf maximal zwei begrenzt. Diese Platten müssen daher jeweils ausgetauscht werden, wenn ihre eine Schneide verschlissen ist. Dies ist relativ unökonomisch und teuer. Die Alternative bestünde in einer Breitschlichtplatte, die zwar mehr nutzbare Schlichtschneiden aufweisen könnte, dann jedoch einen speziellen Plattensitz für eine solche Platte erfordern würde, was jedoch aufwendig und unzweckmäßig wäre, da der Fräser dann auf die Verwendung nur dieses einen Typs von Schrupp- und Schlichtschneideinsätzen beschränkt wäre.

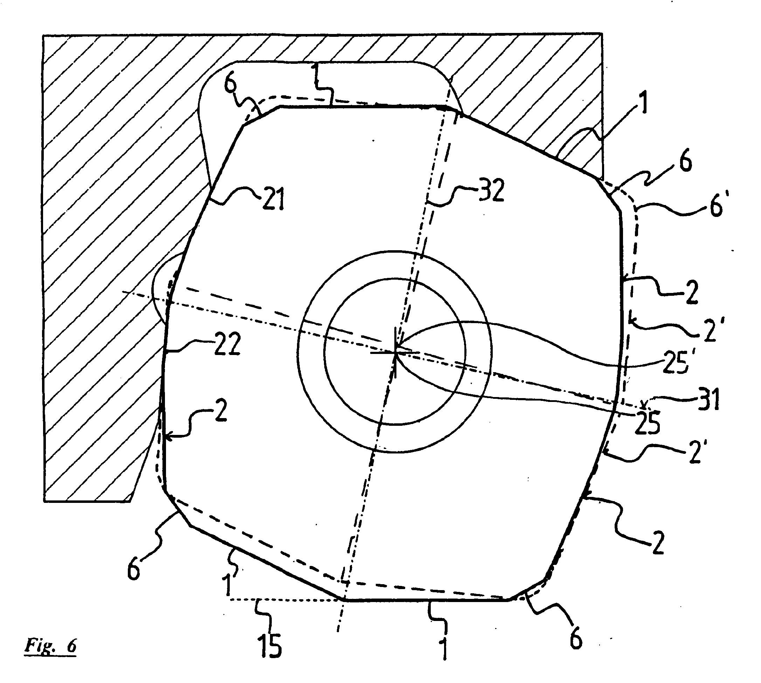

Wie man jedoch anhand der Figur 2 (und noch besser in Figur 6) erkennt, kann auch die erfindungsgemäße Wendeschneidplatte 100 in denselben, durch Anlageflächen 10a, 10b, 10c gebildeten Plattensitz eingesetzt werden, den auch eine nur mit Schruppschneiden ausgestattete Wendeschneidplatte 100' einnehmen würde, wobei aber allein auf einer Seite zwei (diagonal gegenüberliegende) Schlichtschneiden 1a, 1d zur Verfügung stehen, die bei der Ausbildung als doppelseitige Wendeschneidplatte sich sogar noch auf vier Schlichtschneiden verdoppeln.

Die spezielle Form der Schruppschneiden 2 und ihre Abwinkelung relativ zu den Schlichtschneiden 1, bzw. genauer gesagt der an diese Schneiden angrenzenden Flächen 4, 5a und 5b, dient vor allem dazu, daß der erfindungsgemäße Schneideinsatz 100 in demselben Plattensitz 10a, 10b, 10c aufgenommen werden kann wie die Schruppeinsätze 100'. Bei Verwendung an einem entgegengesetzt drehenden Planfräser würde sich die Zahl der verwendbaren Schlichtschneiden sogar auf acht erhöhen. Dies bedeutet gegenüber den herkömmlichen Breitschlichtplatten eine Steigerung der Schneidenzahl um den Faktor vier. Diese Platten sind daher wesentlich ökonomischer in der Verwendung, und in ihrer Herstellung erfordern sie nur eine leichte Modifikation der Ausgangsform entsprechend Figur 4.

Wie man anhand eines Vergleiches der Figuren 2 oder 3 mit Figur 4 und insbesondere anhand der Figur 6, welche den erfindungsgemäßen Schneideinsatz 100 und den nach dem Stand der Technik bekannten Schneideinsatz 100' übereinandergezeichnet darstellt, erkennen kann, unterscheiden sich der Schneideinsatz 100 und der bekannte Schneideinsatz 100' unter anderem in den Eckenwinkeln. Während der Eckenwinkel α der spitzen Ecken 6 bei dem erfindungsgemäßen Schneideinsatz 115° beträgt, beträgt der entsprechende Winkel α' der Ecke 6' des bekannten Schneideinsatzes 100' 110°. Der Winkel β der Ecken 7a bei dem erfindungsgemäßen Schneideinsatz beträgt 155°, und der Winkel β" der stumpfen Ecken 7 des erfindungsgemäßen Schneideinsatzes 100 beträgt 165°. Dagegen beträgt der Winkel β' der stumpfen Ecke 7 des bekannten Schneideinsatzes 100' 160°. In der Summe führt dies jedoch dazu, daß die Schlichtschneiden 1 des erfindungsgemäßen Schneideinsatzes in ihrem an einem Planfräser montierten Zustand sich im wesentlichen in einer zur Fräserachse senkrechten Ebene erstrecken (im wesentlichen in radialer Richtung), während die entsprechenden Schneiden 2' an der Stirnseite eines bekannten Schneideinsatzes 100' einwärts geneigt verlaufen und nur der Übergang an den Ecken 6' zu den Nebenschneiden 2 überhaupt mit dem Werkstück in Eingriff tritt.

Dabei schließen jedoch die unterhalb der Schneidkante 1d liegende Umfangsfläche 4, welche gemäß Figur 2 mit der Anlagefläche 10c eines entsprechenden Planfräsers in Eingriff tritt, mit dem Flächenabschnitt 5a unterhalb des Schneidkantenabschnittes 21, welcher mit der Anlagefläche 10b des Fräsers in Eingriff tritt, denselben Winkel von 90° ein, den auch die entsprechenden, unterhalb der Schneidkanten 2' liegenden Flächen 4' (angedeutet in Figur 4) miteinander einschließen. Dies liegt daran, daß die Summe der Winkel α und β des Schneideinsatzes 100 mit der Summe der Winkel α' und β' des Schneideinsatzes 100' übereinstimmt, obwohl die Winkel α und α' und auch die Winkel β und β' sich jeweils um 5° unterscheiden. Die Anlagefläche 10a, die bei dem erfindungsgemäßen Schneideinsatz wiederum für die Anlage einer Fläche 4' unterhalb der Schneidkante 2' vorgesehen ist, schließt mit der an der Anlagefläche 10b anliegenden Umfangsfläche 4' den Winkel β' von 160° ein. Der entsprechende Winkel β" bei dem erfindungsgemäßen Schneideinsatz 100 beträgt 165°. Da jedoch die Flächenabschnitte 5b unterhalb der Schneidkantenabschnitte 22 bei dem erfindungsgemäßen Schneideinsatz, welche denselben Winkel β" von 165° miteinander einschließen, ihrerseits gegenüber den Umfangsflächenabschnitten 5b wiederum um 5° abgewinkelt sind, ergibt sich im Ergebnis zwischen der Umfangsfläche 5a, die an der Anlagefläche 10b anliegt, und der Umfangsfläche 5b, die an der Anlagefläche 10a anliegt, wiederum derselbe Winkel von 160° wie bei dem bekannten Schneideinsatz. Es ist klar, daß die Erfindung nicht auf die Verwendung dieser speziellen Winkel beschränkt ist, sondern daß nur die obigen Summen α + β bzw. α' + β' übereinstimmen und die Winkel α und α' und auch die Winkel β und β' sich jeweils um den gleichen Winkel unterscheiden.

Neben der abweichenden Symmetrie und den abweichenden Eckenwinkeln und den gebrochenen Seitenflächen 5a, 5b unterscheidet sich der erfindungsgemäße Schneideinsatz 100 aber auch in den konkreten Maßen von dem bekannten Schneideinsatz 100'. Wie man insbesondere anhand der Figur 6 erkennt, ist der kürzeste Abstand einer Schneidkante 1 bzw. Umfangsfläche 4 zu der gegenüberliegenden Ecke 7 größer als der entsprechende kürzeste Abstand einer Schneidkante 2' von der gegenüberliegenden stumpfen Ecke 7' bei dem bekannten Schneideinsatz. Hingegen ist, wie man ebenfalls anhand der Figur 6 vor allem an der oberen radial äußeren Schneidkante 6 erkennen kann, der Abstand dieser Schneidkante 2 bzw. der entsprechenden Abschnitte 21, 22 der Schneidkante 2 zu der diagonal gegenüberliegenden stumpfen Ecke 7b kleiner als der entsprechende kleinste Abstand der Schneidkante 2' zu der diagonal gegenüberliegenden stumpfen Ecke 7'. In dem in ihrem Sitz eingebauten Zustand sind außerdem die Symmetrieachsen 31, 32 des Schneideinsatzes 100 gegenüber den entsprechenden (hier nicht näher bezeichneten, jedoch gestrichelt dargestellten) Achsen des bekannten Schneideinsatzes 100' etwas verdreht und auch die zentralen Achsen 25 bis 25' der Befestigungsbohrung sind etwas gegeneinander verschoben. Im Ergebnis führt dies dazu, daß der erfindungsgemäße Schneideinsatz mit seinen Schruppschneiden 2 bzw. 21, 22 gegenüber den Schneiden 2' des bekannten Schneideinsatzes in radialer Richtung etwas zurückversetzt ist, dafür aber in axialer Richtung mit den Schlichtschneiden 1 über die radial verlaufenden Schneiden 2' der bekannten Schneideinsätze 100' hinausragt. Dies bedeutet wiederum, daß die Schruppschneiden 2 weniger Material zerspanen als die Schruppschneiden 2', wohingegen die Schlichtschneiden 1 die von den Schruppschneiden hinterlassenen Rauhigkeiten beseitigen und damit mehr Material schneiden als die hierzu analog verlaufenden und als Nebenschneiden wirkenden Schneiden 2' der bekannten Schneideinsätze, die im wesentlichen nur im Bereich der Schneidecken 6' Material zerspanen.

Der erfindungsgemäße Schneideinsatz hat daher neben den Schruppschneiden 2 mindestens zwei diagonal gegenüberliegende aktiv einsetzbare Schlichtschneiden 1a und 1c (s. Figur 2), und nach dem Wenden des Schneideinsatzes (so daß die in Figur 2 sichtbare Oberseite nach hinten kommt und die Rückseite vorn liegt) können zwei weitere, den Schneidkanten 1b und 1d in Figur 2 auf der anderen Seite des Schneideinsatzes gegenüberliegende Schneidkanten als entsprechende Schlichtschneiden zum Einsatz kommen. Für eine einzige Drehrichtung bietet der erfindungsgemäße Schneideinsatz also insgesamt vier Schlichtschneiden, wohingegen der Schneideinsatz nach Figur 5 nur eine einzige Schlichtschneide für eine Drehrichtung zur Verfügung hat, wenn er in denselben Plattensitz eingebaut werden soll, wie auch die übrigen Schneideinsätze. Zwar ist die entsprechende Schlichtschneide 1' etwas länger als die Schlichtschneiden 1 des erfindungsgemäßen Schneideinsatzes und würde damit einen noch größeren radialen Vorschub eines entsprechenden Planfräsers erlauben, jedoch reicht die Länge der Schlichtschneiden 1 für die Schneideinsätze 100 der vorliegenden Erfindung für die meisten Anwendungsfälle bei weitem aus, wenn entlang des Umfanges eines Planfräsers ein derartiger Schneideinsatz angeordnet ist. Die symmetrische Ausgestaltung der bevorzugten und hier dargestellten Ausführungsform ermöglicht dabei eine universelle Verwendung ein und desselben Schneideinsatzes in Fräsern mit entgegengesetzter Drehrichtung.

Auch wenn die hier als bevorzugt dargestellte Ausführungsform sowohl doppelseitig (das heißt mit im wesentlichen identischer oberer und unterer Seite, die von denen wahlweise je eine als Spanfläche dienen kann) als auch mit zentraler Befestigungsbohrung beschrieben wurde, versteht es sich, daß die Vorteile der Erfindung auch dann zum Tragen kommen, wenn der Schneideinsatz als einseitiger (aber um eine Achse senkrecht zur oberen Fläche um 180° drehbarer) und/oder ohne zentrale Befestigungsbohrung hergestellt wird (zum Beispiel für die Befestigung mittels Klemmpratze oder Klemmkeil). Solche Ausführungsformen sind deshalb selbstverständlich ebenfalls vom Schutzumfang der vorliegenden Erfindung umfasst, wie er sich aus den Patentansprüchen ergibt.

## Patentansprüche

1. Schneideinsatz (10), insbesondere für Planfräser, mit einer oberen und einer unteren Fläche (3), welche durch umlaufende Randflächen (4) miteinander verbunden sind, wobei der Schneideinsatz in der Draufsicht auf die obere Fläche (3) eine in etwa achteckige Grundform mit abwechselnd kleinen und großen Eckenwinkeln hat, und bezüglich zweier zueinander senkrechter Ebenen, welche jeweils durch gegenüberliegende Ecken (7) mit großen bzw. stumpfen Eckenwinkeln und senkrecht zu der durch die obere Fläche (3) definierten Ebene verlaufen, spiegelsymmetrisch ausgebildet ist wobei zwischen den Ecken (6, 7) jeweils am Übergang der Umfangsflächen (4) zu der oberen und/oder unteren Fläche (3) jeweils Schneidkanten (1a, 1b, 1c, 1d 2a, 2b, 2c, 2d) gebildet werden, von denen ein Teil (2a, 2b, 2c, 2d) für die Verwendung als Schruppschneiden in der Draufsicht leicht gebrochen oder über einen relativ kleineren Radius gekrümmt verlaufen und ein anderer Teil als Schlichtschneiden (1a, 1b, 1c, 1d) zwischen benachbarten Ekken (6, 7) gerade oder mit einem relativ größeren Radius gekrümmt verläuft, **dadurch gekennzeichnet, daß** in der Draufsicht senkrecht auf die Oberfläche der Schneideinsatz nur bezüglich einer Drehung um 180° nicht jedoch bezüglich einer Drehung um 90° symmetrisch ausgebildet ist.

2. Schneideinsatz nach Anspruch 1, **dadurch gekennzeichnet, daß** die Ecken mit dem kleineren bzw. spitzen Eckenwinkel durch eine Abrundung oder eine kurze Fase bzw. Abschrägung gebrochen sind.

3. Schneideinsatz nach einem der Ansprüche 1 oder 2, **dadurch gekennzeichnet, daß** die kleineren Eckenwinkel jeweils ohne Berücksichtigung von Abrundungen oder Abschrägungen um mindestens 30° und vorzugsweise um etwa 40° kleiner sind als die größeren Eckenwinkel.

4. Schneideinsatz nach einem der Ansprüche 1 bis 3, **dadurch gekennzeichnet, daß** die Schruppschneiden (2a, 2b, 2c, 2d) ausgehend von einer Ecke (6) mit kleinerem Eckenwinkel zunächst über einen ersten, vorzugsweise größeren Schneidkantenabschnitt gerade und anschließend um einen kleinen Winkel zwischen 2 und 10° gebrochen über einen zweiten, vorzugsweise kürzeren Abschnitt gerade zu der Ecke (7) mit größerem Ekkenwinkel verlaufen, wobei benachbarte zweite Abschnitte den stumpfen Eckenwinkel definieren.

5. Schneideinsatz nach einem der Ansprüche 1 bis 4, **dadurch gekennzeichnet, daß** er eine zentrale Bohrung (8) aufweist.

6. Schneideinsatz nach einem der Ansprüche 1 bis 5, **dadurch gekennzeichnet, daß** er als doppelseitiger Schneideinsatz ausgebildet ist.

7. Schneideinsatz nach einem der Ansprüche 1 bis 6, **dadurch gekennzeichnet, daß** die obere und/oder die untere Fläche im Anschluß an die Schneidkanten (1a, 1b, 1c, 1d; 2a, 2b, 2c, 2d) eine Spanformungsstruktur, insbesondere eine Spanmulde aufweist.

8. Schneideinsatz nach einem der Ansprüche 1 bis 7, **dadurch gekennzeichnet, daß** der kürzeste Abstand einer Schlichtschneide (1) zu einer diagonal gegenüber liegenden stumpfen Ecke (7a) größer ist als der kürzeste Abstand einer Schruppschneide (2) zu einer diagonal gegenüber liegenden stumpfen Ecke (7b).

9. Schneideinsatz nach Anspruch 8, **dadurch gekennzeichnet, daß** die Differenz der kürzesten Abstände zwischen 0,1 und 2 mm, vorzugsweise zwischen 0,2 und 0,6mm beträgt

10. Planfräser mit stirnseitig am Umfang angeordneten Sitzen (10a, 10b, 10c) für mehrere in der Grundform achteckige Schruppschneideinsätze (100, 100'), wobei in mindestens einem Plattensitz ein Schneideinsatz (100) angeordnet ist, der eine obere und eine untere Fläche (3) aufweist, welche durch umlaufende Randflächen (4) miteinander verbunden sind, wobei der Schneideinsatz in der Draufsicht auf die obere Fläche (3) eine in etwa achteckige Grundform mit abwechselnd kleinen und großen Eckenwinkeln hat, wobei zwischen den Ecken (6, 7) jeweils am Übergang der Umfangsflächen (4) zu der oberen und/oder unteren Fläche (3) jeweils Schneidkanten (1 a, 1b, 1c, 1 d; 2a, 2b, 2c, 2d) gebildet werden, wobei ein Teil der Schneidkanten für die Verwendung als Schruppschneiden (2a, 2b, 2c, 2d) in der Draufsicht leicht gebrochen oder über einen relativ kleineren Radius gekrümmt verläuft, **dadurch gekennzeichnet, dass** ein anderer Teil der Schneidkanten als Schlichtschneiden (1a, 1b, 1c, 1d) zwischen benachbarten Ecken (6, 7) gerade oder mit einem relativ größeren Radius gekrümmt verläuft, wobei in der Draufsicht senkrecht auf die Oberfläche der Schneideinsatz nur bezüglich einer Drehung um 180° nicht jedoch bezüglich einer Drehung um 90° symmetrisch ausgebildet ist

11. Planfräser nach Anspruch 10, **dadurch gekennzeichnet, daß** in mindestens einem Plattensitz ein Schneideinsatz (100)nach einem der Ansprüche 1 bis 9 angeordnet ist.

12. Planfräser nach Anspruch 10 oder 11, **dadurch gekennzeichnet, daß** die Plattensitze (10a, 10b, 10c) für die Schruppschneideinsätze (100') und den Schlichtschneideinsatz (100) identisch ausgebildet und axial und radial identisch positioniert sind.

## Claims

1. A cutting bit (10), in particular for face milling cutters, having an upper and a lower surface (3) which are connected together by circumferential edge surfaces (4), wherein the cutting bit in plan view on to the upper surface (3) is of an approximately octagonal basic shape with alternately small and large corner angles, wherein formed between the respective corners (6, 7) at the transition of the circumferential surfaces (4) to the upper and/or lower surface (3) are respective cutting edges (1a, 1b, 1c, 1d, 2a, 2b, 2c, 2d) of which a part (2a, 2b, 2c, 2d) for use as roughing cutting edges in plan view extend in a slightly mutually deflected configuration or curved over a relatively smaller radius and another part as finishing cutting edges (1a, 1b, 1c, 1d) extends between adjacent corners (6, 7) straight or with a relatively larger radius, **characterised in that** in the plan view perpendicularly on to the surface the cutting bit is of a symmetrical configuration only with respect to a rotation through 180° but not with respect to a rotation through 90°, and is of a mirror image symmetrical configuration with respect to two mutually perpendicular planes which respectively extend through oppositely disposed corners (7) with large and obtuse corner angles and perpendicularly to the plane defined by the upper surface (3).

2. A cutting bit according to claim 1 **characterised in that** the corners with the smaller or acute corner angles are broken by a rounded configuration or a short chamfer or bevel.

3. A cutting bit according to one of claims 1 or 2, **characterised in that** the smaller corner angles, without consideration of rounded configurations or bevels, are respectively smaller than the larger corner angles by at least 30° and preferably by about 40°.

4. A cutting bit according to one of claims 1 to 3 **characterised in that** the roughing cutting edges (2a, 2b, 2c, 2d) extend from a corner (6) with a smaller corner angle firstly by way of a first, preferably larger cutting edge portion in a straight line and then deflected through a small angle of between 2 and 10° over a second, preferably shorter portion in a straight line to the corner (7) with the larger corner angle, wherein adjacent second portions define the obtuse corner angle.

5. A cutting bit according to one of claims 1 to 4 **characterised in that** it has a central bore (8).

6. A cutting bit according to one of claims 1 to 5 **characterised in that** it is in the form of a double-sided cutting bit.

7. A cutting bit according to one of claims 1 to 6 **characterised in that** the upper and/or the lower surface adjoining the cutting edges (1a, 1b, 1c, 1d; 2a, 2b, 2c, 2d) a chip shaping structure, in particular a chip recess.

8. A cutting bit according to one of claims 1 to 7 **characterised in that** the shortest spacing of a finishing cutting edge (1) relative to a diagonally oppositely disposed obtuse corner (7a) is greater than the shortest spacing of a roughing cutting edge (2) relative to a diagonally oppositely disposed obtuse corner (7b).

9. A cutting bit according to claim 8 **characterised in that** the difference in the shortest spacings is between 0.1 and 2 mm, preferably between 0.2 and 0.6 mm.

10. A face milling cutter with seats (10a, 10b, 10c) arranged at the circumference at the front end, for a plurality of roughing cutting bits (100, 100') which are octagonal in basic shape, a cutting bit (100) being arranged in at least one bit seat, said cutting bit having an upper and a lower surface (3) which are connected together by circumferential edge surfaces (4), wherein the cutting bit in plan view on to the upper surface (3) is of an approximately octagonal basic shape with alternately small and large corner angles, wherein formed between the respective corners (6, 7) at the transition of the circumferential surfaces (4) to the upper and/or lower surface (3) are respective cutting edges (1a, 1b, 1c, 1d, 2a, 2b, 2c, 2d) of which a part (2a, 2b, 2c, 2d) for use as roughing cutting edges in plan view extend in a slightly mutually deflected configuration or curved over a relatively smaller radius, **characterised in that** another part of the cutting edges extends between adjacent corners (6, 7) straight or with a relatively larger radius as finishing cutting edges (1a, 1b, 1c, 1d), wherein in the plan view perpendicularly on to the surface the cutting bit is of a symmetrical configuration only with respect to a rotation through 180° but not with respect to a rotation through 90°.

11. A face milling cutter according to claim 10 **characterised in that** in at least one bit seat here is arranged a cutting bit according to one of claims 1 to 9.

12. A face milling cutter according to claim 10 or 11 **characterised in that** the bit seats (10a, 10b, 10c) for the roughing cutting bits (100') and the finishing cutting bit (100) are identical and are axially and radially identically positioned.

## Revendications

1. Plaquette de coupe (10), en particulier pour fraise à surfacer, comprenant une surface supérieure et une surface inférieure (3) reliées l'une à l'autre par des surfaces de bord circulaires (4), la plaquette de coupe présentant en vue en élévation de la surface supérieure (3) une forme de base à peu près octogonale dotée d'angles de pointe tour à tour petits et grands, et étant conçue à symétrie inversée par rapport à deux plans perpendiculaires à l'un à l'autre, lesquels s'étendent respectivement à travers des coins opposés (7) dotés d'angles de pointe grands ou obtus et perpendiculairement au plan défini par la surface supérieure (3), respectivement des tranchants (1a, 1b, 1c, 1d, 2a, 2b, 2c, 2d), parmi lesquels une partie (2a, 2b, 2c, 2d) pour l'utilisation comme tranchants de dégrossissage s'étend en vue en élévation d'une façon légèrement brisée ou incurvée suivant un rayon relativement petit et une autre partie en tant que tranchants de lissage (1a, 1b, 1c, 1d) s'étend en ligne droite entre des coins adjacents (6, 7) ou de façon incurvée suivant un rayon relativement plus important, étant formés entre les coins (6, 7) respectivement au niveau de la transition entre les surfaces périphériques (4) et la surface supérieure et/ou inférieure (3), **caractérisée en ce que** la plaquette de coupe, en vue en élévation perpendiculaire à la surface, n'est conçue de façon symétrique que par rapport à une rotation à 180°, et non par rapport à une rotation à 90°.

2. Plaquette de coupe selon la revendication 1, **caractérisée en ce que** les coins dotés de l'angle de pointe plus petit ou aigu sont brisés par un congé ou un court chanfrein ou encore biseau.

3. Plaquette de coupe selon l'une quelconque des revendications 1 ou 2, **caractérisée en ce que** les angles de pointe plus petits, respectivement sans tenir compte des congés ou biseaux, sont plus petits d'au moins 30° et de préférence d'environ 40° que les angles de pointe plus grands.

4. Plaquette de coupe selon l'une quelconque des revendications 1 à 3, **caractérisée en ce que** les tranchants de dégrossissage (2a, 2b, 2c, 2d), en partant d'un coin (6) doté d'un angle de pointe plus petit, s'étendent tout d'abord en ligne droite en passant par un premier segment de tranchant, de préférence plus grand, puis de façon brisée suivant un petit angle compris entre 2 et 10° en passant par un second segment, de préférence plus court, en ligne droite en direction du coin (7) doté de l'angle de pointe plus grand, les seconds segments adjacents définissant l'angle de pointe obtus.

5. Plaquette de coupe selon l'une quelconque des revendications 1 à 4, **caractérisée en ce qu'**elle comprend un alésage central (8).

6. Plaquette de coupe selon l'une quelconque des revendications 1 à 5, **caractérisée en ce qu'**elle est conçue comme une plaquette de coupe biface.

7. Plaquette de coupe selon l'une quelconque des revendications 1 à 6, **caractérisée en ce que** la surface supérieure et/ou la surface inférieure immédiatement après les tranchants (1a, 1b, 1c, 1d ; 2a, 2b, 2c, 2d) une structure de formation de copeaux, en particulier une cavité pour copeaux.

8. Plaquette de coupe selon l'une quelconque des revendications 1 à 7, **caractérisée en ce que** l'écart le plus court entre un tranchant de lissage (1) et un coin obtus (7a) en regard de celui-ci en diagonale est supérieur à l'écart le plus court entre un tranchant de dégrossissage (2) et un coin obtus (7b) en regard de celui-ci en diagonale.

9. Plaquette de coupe selon la revendication 8, **caractérisée en ce que** la différence entre les écarts les plus courts est comprise entre 0,1 et 2 mm, de préférence entre 0,2 et 0,6 mm.

10. Fraise à surfacer comprenant des sièges (10a, 10b, 10c) disposés frontalement sur la périphérie pour plusieurs plaquettes de coupe de dégrossissage (100, 100') présentant une forme de base octogonale, une plaquette de coupe (100) comprenant une surface supérieure et une surface inférieure (3) reliées l'une à l'autre par des surfaces de bord circulaires (4) étant disposée dans au moins un siège de plaquette, la plaquette de coupe présentant en vue en élévation de la surface supérieure (3) une forme de base à peu près octogonale dotée d'angles de pointe tour à tour petits et grands, respectivement des tranchants (1a, 1b, 1c, 1d ; 2a, 2b, 2c, 2d) étant formés entre les coins (6, 7) respectivement au niveau de la transition entre les surfaces périphériques (4) et la surface supérieure et/ou inférieure (3), une partie des tranchants pour l'utilisation comme tranchants de dégrossissage (2a, 2b, 2c, 2d) s'étendant en vue en élévation d'une façon légèrement brisée ou incurvée suivant un rayon relativement petit, **caractérisée en ce qu'**une autre partie des tranchants en tant que tranchants de lissage (1a, 1b, 1c, 1d) s'étend en ligne droite entre des coins adjacents (6, 7) ou de façon incurvée suivant un rayon relativement plus important, la plaquette de coupe, en vue en élévation perpendiculaire à la surface, n'étant cependant conçue de façon symétrique que par rapport à une rotation à 180° et non par rapport à une rotation à 90°.

11. Fraise à surfacer selon la revendication 10, **caractérisée en ce qu'**une plaquette de coupe (100) selon l'une quelconque des revendications 1 à 9 est disposée dans au moins un siège de plaquette.

12. Fraise à surfacer selon la revendication 10 ou 11, **caractérisée en ce que** les sièges de plaquette (10a, 10b, 10c) pour les plaquettes de coupe de dégrossissage (100') et la plaquette de coupe de lissage (100) sont conçus de façon identique et positionnés axialement et radialement de façon identique.
